**Europäisches Patentamt**

**European Patent Office**

**Office européen des brevets**

(19)

(11) Numéro de publication : **0 315 526 B1**

(12) **FASCICULE DE BREVET EUROPEEN**

(45) Date de publication du fascicule du brevet :
**16.10.91 Bulletin 91/42**

(51) Int. Cl.$^5$ : **C02F 3/30, B09B 5/00**

(21) Numéro de dépôt : **88402751.7**

(22) Date de dépôt : **03.11.88**

(54) **Procédé de détoxification anoxique in situ de nappes souterraines contaminées.**

(30) Priorité : **04.11.87 FR 8715272**

(43) Date de publication de la demande :
**10.05.89 Bulletin 89/19**

(45) Mention de la délivrance du brevet :
**16.10.91 Bulletin 91/42**

(84) Etats contractants désignés :
**BE CH DE ES GB IT LI LU NL SE**

(56) Documents cités :
**EP-A- 0 086 863**
**EP-A- 0 154 105**
**DE-A- 2 533 775**
**DE-A- 3 622 721**
**FR-A- 2 302 279**
**FR-A- 2 550 182**
**US-A- 3 846 290**

(73) Titulaire : **SAFEGE SOCIETE ANONYME**
**FRANCAISE D'ETUDES ET DE GESTION**
**76 rue des Suisses**
**F-92007 Nanterre Cédex (FR)**

(72) Inventeur : **Patrier**
**22, rue Sophie Rodriguès**
**F-92500 Rueil Malmaison (FR)**
Inventeur : **Saunier, Bernard**
**25, rue Victor Hugo**
**F-78420 Carrieres-sur-Seine (FR)**

(74) Mandataire : **Marquer, Francis et al**
**35, Avenue Victor Hugo**
**F-78960 Voisins le Bretonneux (FR)**

## Description

L'invention se rapporte à la réhabilitation des eaux souterraines contaminées, de façon localisée ou diffuse, par infiltration d'effluents industriels, agricoles ou domestiques, en vue de restaurer la qualité de telles eaux pour l'alimentation humaine.

La mise aux normes de telles eaux par des procédés classiques est techniquement possible, mais entraîne des surcoûts financiers importants nécessaires à la réalisation d'unités de dégazage, d'adsorption sur charbon actif, d'échange d'ions avec décharge des effluents de régénération, ou de traitement biologique avec décharge de boues.

FR-A-2550182 décrit un procédé de dénitrification in situ des eaux souterraines au moyen de micro-organismes, en présence d'un substrat carboné, constitué par exemple de certains co-produits de l'industrie agro-alimentaire, des résidus de récolte tels que la paille, ou de copeaux de bois.

Par les brevets EP-A-154105 et EP-A-086863, on a proposé des solutions visant à l'élimination des nitrates. Toutefois, ces solutions qui ne concernent pas les composés toxiques organiques, conduisent à terme au colmatage de l'aquifère et à un fonctionnement en anaérobiose, donc dangereux.

D'une manière plus générale, on sait que la dégradation de composés organiques in situ est renforcée par l'apport aux bactéries naturelles du sol de solutions nutritives (azote, phosphore, oligo-éléments) dont la présence insuffisante constituerait un facteur de limitation de la croissance et, pour ce qui concerne la biodégradation aérobie, en apportant une source d'oxygène.

Toutefois, malgré l'avantage thermodynamique important de l'oxygène, sa faible solubilité dans l'eau en limite les possibilités ; le peroxyde d'oxygène, qui pourrait également être utilisé et qui constitue un oxydant très puissant, est instable et surtout toxique pour les micro-organismes non adaptés.

Devant les difficultés de mise en oeuvre du métabolimse aérobie, on a envisagé de mettre en oeuvre, dans certaines expériences (Ground Water Monitoring Review, 1986, 6, No 4, p. 57-64), la capacité de certains organismes d'utiliser, comme accepteurs d'électrons nécessaires aux oxydations des polluants, des nitrates ou sulfates, quand les conditions sont anoxiques.

L'invention propose un procédé pratique de détoxification anoxique in situ de nappes souterraines contaminées par des composés organiques toxiques tels que : nitrates, pesticides, solvants chlorés, pyralènes, huiles minérales, composés organo-chimiques anthropogéniques divers.

Le procédé suivant l'invention est caractérisé par le confinement dans une partie de l'aquifère, par production de gradients hydrauliques, d'une zone de réaction à l'intérieur de laquelle sont contrôlées à la fois la croissance de micro-organismes aptes à respirer, en régime anoxique, des sources d'oxygène covalent, et aptes à cométaboliser les composés toxiques organiques à éliminer, la concentration d'une telle source d'oxygène covalent, et la concentration d'une source de carbone dégradable.

La présence des micro-organismes appropriés dans la zone de réaction est contrôlée par des prélèvements et analyses, et un apport est effectué, si nécessaire, par un inoculum réalisé après acclimatation des micro-organismes aux polluants concernés.

Les nitrates ou autres sources d'oxygène covalent sont, sauf dans le cas où ils constituent l'un des polluants, apportés à l'aspiration des pompes de réinjection, tandis que la source de carbone dégradable est fournie, soit par apport d'un mélange binaire d'éthanol et d'acide acétique, soit au moyen d'une combinaison tertiaire incorporant un effluent d'industrie d'agro-alimentaire.

Selon un mode d'exécution préféré, les apports de la source de carbone dégradable, ainsi que les apports, éventuellement nécessaires, de facteurs de croissance des micro-organismes, ainsi que les gradients hydrauliques, sont contrôlés de manière à obtenir alternativement des séquences de cométabolisation des composés toxiques et de respiration endogène des micro-organismes.

D'autres particularités, ainsi que les avantages de l'invention, apparaîtront à la lumière de la description ci-après.

Au dessin annexé :

La figure 1 montre en plan le confinement de la zone de réaction au moyen de gradients hydrauliques ;

La figure 2 schématise l'installation de confinement et illustre dans l'espace le réseau d'injection et de pompage et les courbes de niveau piézométrique dans la zone de réaction ;

La figure 3 représente schématiquement une partie du réseau définissant une zone de réaction formée entre un point d'injection et un point de pompage, et une zone de filtration en aval ;

La figure 4 illustre en plan le cheminement des flux dans le réseau.

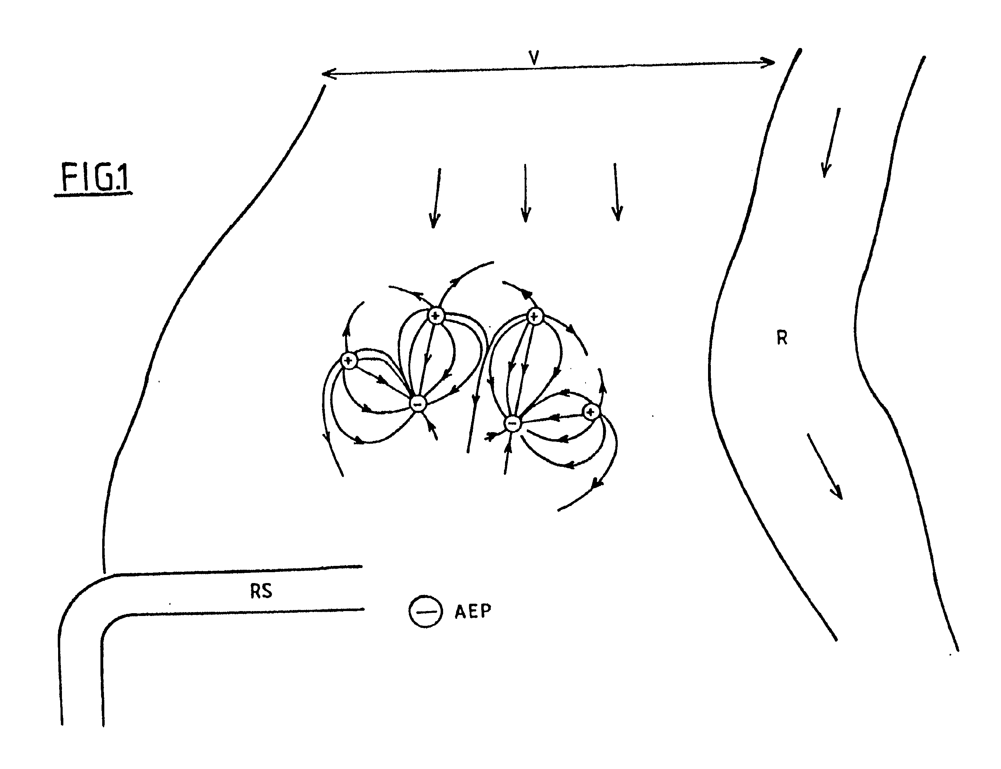

A la figure 1, on a représenté schématiquement, vu en plan, l'emplacement d'une nappe phréatique située dans une vallée alluviale V ; R désigne une rivière, RS une route de service. Les grandes flèches indiquent le sens général d'écoulement, les signes + entourés d'un cercle, des puits d'injection, au nombre de quatre dans l'exemple non limitatif décrit ; les signes—entourés d'un cercle désignent des puits de pompage (au nombre de deux), AEP est une alimentation en eau potable. Les six puits ont permis d'établir les gradients nécessaires au confinement des micro-organismes et des apports dans une zone de réaction située en amont du point de prélèvement AEP de l'eau traitée, et séparée de celui-ci par un espace de filtrage. L'implantation des puits est telle que la zone de réaction intercepte le maximum du flux de la nappe.

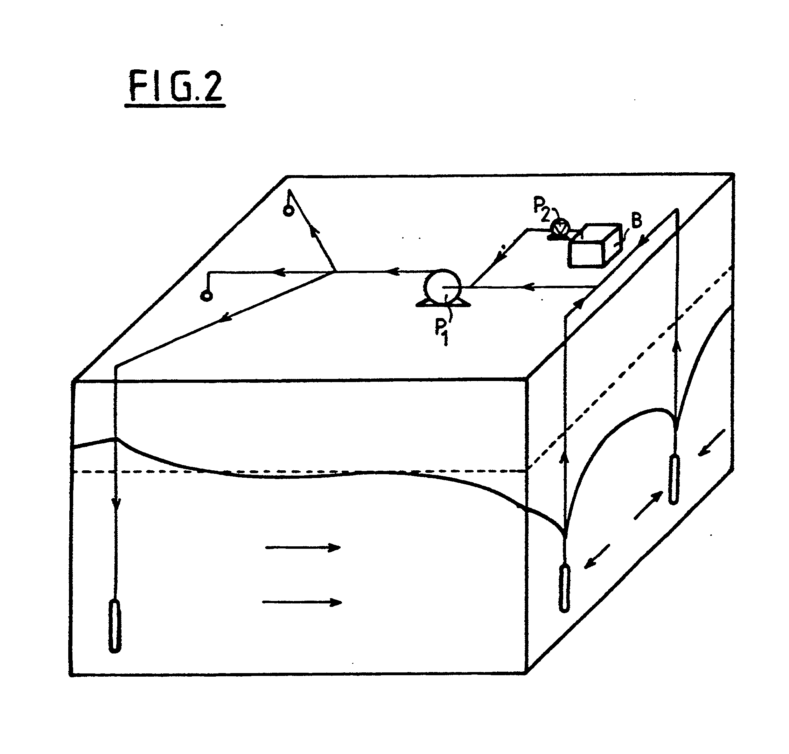

Des tubes piézométriques, répartis sur le site, permettent de contrôler les niveaux piézométriques. Les lignes de courant entre les puits en fonction des différences de niveaux piézométriques ont été représentées à la figure 1, tandis que la figure 2 représente les courbes de niveau piézométrique entre des points d'injection et des points de pompage. Une pompe $P_1$ assure l'injection et le pompage et reçoit, côté aspiration, les apports provenant d'un distributeur B et dosés par une pompe $P_2$. Le procédé peut être utilisé aussi bien pour une nappe libre que pour une nappe confinée ; dans ce dernier cas, pour éviter le risque d'embolie gazeuse lié à l'activité des micro-organismes, une unité de dégazage (non figurée) sera prévue dans les conduites.

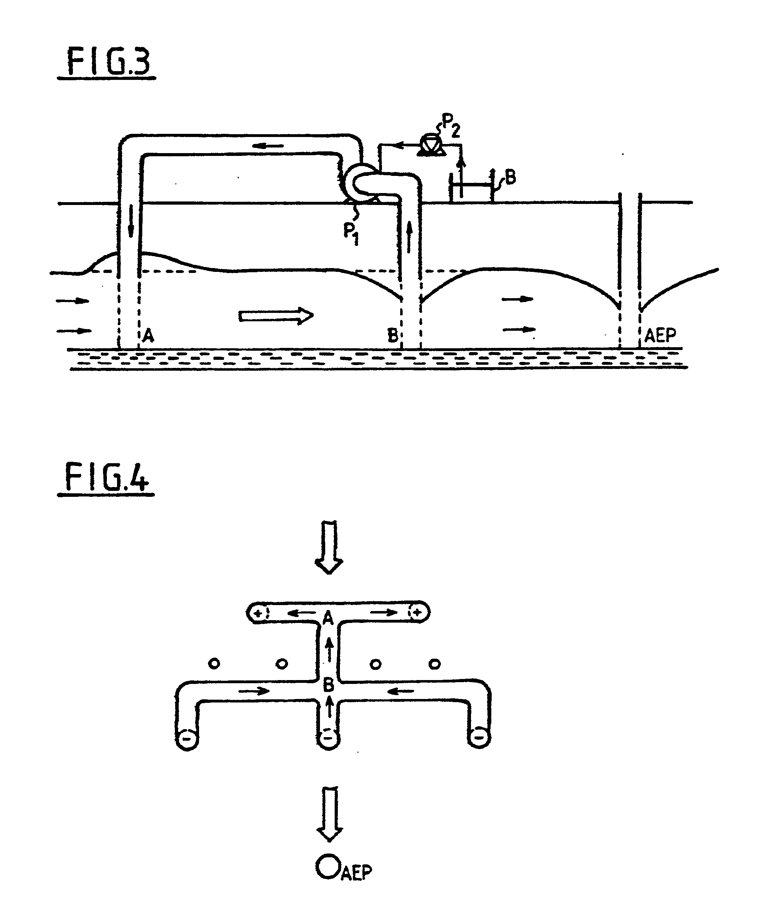

Les figures 3 et 4 montrent qu'en aval de la zone de réaction AB disposée de façon à intercepter le maximum du flux hydraulique, il existe une zone de filtration lente qui aboutit au cône de rabattement du puits de distribution AEP. Cette zone assure le polissage et la finition de la qualité de l'eau et piège les fuites éventuelles des bactéries et des métabolites formés dans la zone de réaction.

### Exemple 1

On a traité une nappe contaminée par des nitrates (100 mg/l $NO^-_3$) et divers pesticides (Lindane, Atrazine, Parathion), à raison de 100 µg/l.

On a inoculé la nappe à partir de boues biologiques acclimatées dans un milieu spécifique en flacons fermés. La recirculation effectuée à partir du point B par la pompe $P_1$ assure un réensemencement de l'influent et permet l'apport, depuis le distributeur B et à travers la pompe doseuse $P_2$, d'une source carbonée primaire (Ethanol 2/3, Acétate 1/3) ainsi que de phosphore. Le suivi des diverses concentrations a été effectué par des méthodes colorimétriques ($NO^-_3$, P) et par chromatographie en phase gaz pour les pesticides (ECD : Lindane, Thermoionique : Atrazine et Parathion) sur des prélèvements d'entrée et de sortie du réacteur.

Après une semaine de fonctionnement avec un temps de séjour hydraulique de 2 heures, l'abattement constaté était d'environ 80% pour les nitrates, 30% pour le Lindane, 60% pour l'Atrazine et le Parathion. Après trois semaines, l'abattement était de quasiment 100% en nitrates et supérieur à 90% en pesticides.

La quatrième semaine, le réacteur a été alimenté à un débit plus élevé, soit un temps de séjour hydraulique d'une heure.

A partir de la cinquième semaine, l'apport du complément carboné et phosphoré a été opéré de façon séquentielle à raison d'un cycle d'alimentation pour trois cycles de respiration endogène, soit 20 mn d'alimentation toutes les 2 heures, la recirculation n'étant pas stoppée. Dans un premier temps, il a été noté une très légère pointe de nitrate (10 mg/l) ainsi que de Lindane (5 µg/l : limite de détection) simultanément. Mais très rapidement, après deux jours de fonctionnement, l'effluent a retrouvé sa qualité antérieure.

### Exemple 2

Il concerne un site de pompage (50 m³/h) en nappe alluviale contaminée par des solvants chlorés ($CCl_4$, $C_2HCl_3$, $C_2Cl_4$). L'eau a été restaurée à un niveau de qualité acceptable (< 2 µg/l) à partir de concentrations de polluant de 5 à 20 µg/l. Les nitrates présents (50 mg/l) dans la nappe ont été ramenés à environ 15-20 mg/l.

Dans les deux exemples ci-dessus, les nitrates étaient présents au départ dans la nappe.

En leur absence, il faut évidemment les introduire (en B, $P_2$) à l'aspiration de la pompe $P_1$ en plus de la source de carbone primaire.

Il doit être bien compris, en effet, que les nitrates (ou autre source d'oxygène covalent, comme indiqué plus haut) sont respirés par les bactéries en régime anoxique et ainsi constituent l'accepteur d'électrons nécessaire aux oxydations des composés toxiques.

L'avantage de ce régime est que les nitrates sont solubles dans l'eau en grandes quantités et qu'ils fournissent un différentiel énergétique appréciable.

Une source de carbone primaire, donc facilement dégradable, est également indispensable, du fait qu'elle procure une balance énergétique bénéficiaire, à la cométabolisation des sources de carbone secondaire que sont les composés toxiques ; cette cométabolisation constitue une étape du processus suivant :

— biosorption du composé toxique dans le biofilm constitué par les bactéries,

— action des exo-enzymes réalisant la coupure des cycles aromatiques et les déhalogénations éventuelles,

— ingestion cellulaire et cométabolisation,

— rejet des métabolites et des éléments minéraux résultant de la dégradation.

L'une des particularités du procédé est le contrôle de la croissance de la population bactérienne ; cette croissance est accélérée par l'apport d'agents tels que le phosphore, et ralentie par la mise en respiration endogène du réacteur ; c'est-à-dire un régime où les bactéries cessent de cométaboliser les polluants et utilisent leur propre carbone.

Dans les Exemples 1 et 2 ci-dessus, on obtient le passage alternatif d'un régime à l'autre de manière particulièrement simple et efficace en interrompant périodiquement l'apport carboné et phosphoré, mais d'autres moyens de contrôle pourraient être mis en oeuvre, par exemple une alimentation "étagée" de différentes couches du réacteur situées à des profondeurs différentes. Le moyen décrit, réduit le coût du traitement en économisant le carbone primaire.

On notera qu'en l'absence de contrôle, un biofilm susceptible de colmater la surface du substrat poreux de l'aquifère risquerait de se former.

On notera que le procédé sera, de préférence, contrôlé de manière telle qu'un résiduel de nitrate, conforme à la législation sanitaire, soit maintenu dans l'eau de distribution, pour éviter l'anaérobiose du réacteur (passager à un régime de fermentation risquant de produire des toxines) et la réduction, donc la solubilisation, des dépôts de fer et de manganèse du sol. Le procédé décrit peut être utilisé pour la déferrisation et démanganisation, du fait de la biorétention de ces ions par les micro-organismes.

Les incidences économiques du procédé décrit sont très importantes, tant en coût d'investissement (absence de structures lourdes à la surface du sol) qu'au niveau des coûts d'exploitation (faible consommation de la source de carbone primaire du fait de la respiration endogène des bactéries).

## Revendications

1. Procédé de détoxification anoxique in situ de nappes souterraines contaminées par des composés organiques toxiques, caractérisé par le confinement dans une partie de l'aquifère, par production de gradients hydrauliques, d'une zone de réaction (AB) contenant des micro-organismes, à l'intérieur de laquelle sont contrôlées à la fois : la croissance de micro-organismes aptes à respirer, en régime anoxique des sources d'oxygène covalent, et aptes à cométaboliser les composés toxiques organiques à éliminer ; la concentration d'une source d'oxygène covalent ; et la concentration d'une source de carbone dégradable.

2. Procédé selon la revendication 1, caractérisé en ce que les apports de la source de carbone dégradable, ainsi que les apports, éventuellement nécessaires, de facteurs de croissance des micro-organismes, ainsi que les gradients hydrauliques, sont contrôlés de manière à obtenir alternativement des séquences de cométabolisation des composés toxiques et de respiration endogène des micro-organismes.

3. Procédé selon la revendication 1, caractérisé par le fait que la croissance des micro-organismes appropriés dans la zone de réaction est contrôlée par des prélèvements et analyses, et un apport est effectué, si nécessaire, par un inoculum réalisé après acclimatation des micro-organismes aux polluants concernés.

4. Procédé selon la revendication 2, caractérisé en ce que le contrôle desdits apports comporte l'alternance, à fréquence contrôlée, de cycles d'apport et de cycles d'interruption desdits apports.

5. Procédé selon la revendication 1 ou 2, caractérisé en ce que le confinement de la zone de la réaction est obtenu au moyen de puits de pompage et de réinjection, implantés en fonction du site de manière telle que ladite zone de réaction intercepte le maximum du flux de la nappe.

6. Procédé selon la revendication 1 ou 2, caractérisé par une zone tampon (B, AEP), dite de filtration lente, entre ladite zone de réaction et le cône de rabattement d'un puits de pompage vers la distribution (AEP).

7. Procédé selon la revendication 5, caractérisé par l'implantation sur le site de tubes piézométriques permettant d'effectuer le suivi du traitement.

8. Procédé selon la revendication 1 ou 2, caractérisé en ce que ladite source de carbone dégradable comprend un mélange binaire d'éthanol et d'acide acétique ou une combinaison tertiaire incorporant un effluent de l'industrie agro-alimentaire.

9. Procédé selon les revendications 2 et 5, caractérisé en ce que lesdits apports se font à l'aspiration d'une pompe ($P_1$) reliée côté aspiration aux puits de pompage et côté refoulement aux puits de réinjection.

10. Procédé selon la revendication 5, caractérisé en ce que, lorsqu'il est utilisé en nappe confinée, une unité de dégazage est prévue dans les conduites de pompage et de réinjection.

## Claims

1. A method for the in situ anoxic detoxification of underground water beds, contaminated by toxic organic compounds, characterized in that a reaction zone (AB) containing micro-organisms is confined in a portion of the aquifer, by the production of hydraulic gradients, inside which reaction zone the growth of micro-organisms capable of respiring covalent oxygen sources under anoxic conditions and capable of cometabolizing the organic toxic compounds to be eliminated, the concentration of a covalent oxygen source and the concentration of a degradable carbon source are monitored at one and the same time.

2. The method as claimed in claim 1, characterized in that the make-up supplies of the degradable carbon source, as well as the make-up supplies, as required, of growth factors for the micro-organisms, and the hydraulic gradients, are controlled so as to obtain alternately sequences of cometabolization of the toxic compounds and endogenous respiration of the micro-organisms.

3. The method as claimed in claim 1, characterized by the fact that the growth of the appropriate micro-organisms in the reaction zone is monitored by samples and analyses and a make-up supply is provided, if required, by an inoculum carried out after the micro-organisms have become acclimatized to the pollutants concerned.

4. The method as claimed in claim 2, characterized in that monitoring of said make-up supplies comprises the alternation at controlled frequency, of make-up supply cycles and cycles of interruption of said make-up supplies.

5. The method as claimed in claim 1 or 2, characterized in that the confinement of the reaction zone is obtained by means of pumping and reinjection wells, implanted as a function of the site so that said reaction zone intercepts the maximum flow of the water bed.

6. The method as claimed in claim 1 or 2, characterized by a buffer zone (B, AEP), called slow filtration zone, between said reaction zone and the drawdown cone of a well pumping towards the distribution side (AEP).

7. The method as claimed in claim 5, characterized by the fact that piezometric tubes are implanted on the site for checking the treatment.

8. The method as claimed in claim 1 or 2, characterized in that said degradable carbon source comprises a binary mixture of ethanol and acetic acid or a tertiary combination incorporating an effluent from the agro-alimentary industry.

9. The method as claimed in claims 2 and 5, characterized in that said make-up supplies are provided to the suction side of a pump ($P_1$) connected on the suction side to the pumping wells and on the delivery side to the reinjection wells.

10. The method as claimed in claim 5, characterized by the fact that, when it is used in a confined water bed, a degassing unit is provided in the pumping and reinjection ducts.

## Patentansprüche

1. Anoxisches in-situ Entgiftungsverfahren für von giftigen organischen Verbindungen verunreinigtes Grundwasser, gekennzeichnet durch die Einschliessung, in einen Teil des wasserführenden Bereichs, durch Erzeugung hydraulischer Gefälle, einer Mikroorganismen enthaltenden Reaktionszone (AB), innerhalb derer man zur gleichen Zeit steuert : das Wachstum der Mikroorganismen die, unter anoxischen Bedingungen, kovalente Sauerstoffquellen atmen und die auszuscheidenden giftigen organischen Verbindungen in den Stoffwechsel einbeziehen können ; die Konzentration einer kovalenten Sauerstoffquelle ; und die Konzentration einer Quelle für abbaubaren Kohlenstoff.

2. Verfahren nach Anspruch 1, dadurch gekennzeichnet, dass die Zufuhr von der Quelle abbaubaren Kohlenstoffs, sowie die eventuell nötige Zufuhr von Wachstumsfaktoren für die Mikroorganismen, sowie die hydraulischen Gefälle so gesteuert werden, dass abwechselnd eine Einbeziehung der giftigen Verbindungen in den Stoffwechsel und eine endogene Atmung der Mikroorganismen stattfindet.

3. Verfahren nach Anspruch 1, dadurch gekennzeichnet, dass das Wachstum der geeigneten Mikroorganismen in der Reaktionszone durch Entnahmen und Analysen kontrolliet wird und, wenn nötig, eine Zufuhr durch Einimpfung stattfindet, nachdem sich die Mikroorganismen an die betroffenen Verschmutzer angepasst haben.

4. Verfahren nach Anspruch 2, dadurch gekennzeichnet, dass, zur Steuerung der besagten Zufuhr, der Wechsel, dessen Häufigkeit gesteuert wird, von Zufuhr und Zufuhrunterbrechung gehört.

5. Verfahren nach Anspruch 1 oder 2, dadurch gekennzeichnet, dass die Einschliessung der Reaktionszone durch Pumpen- und Wiedereinführbrunnen erreicht wird, die, je nach dem betroffenen Bereich, so angeordnet sind, dass der grösstmögliche Teil des Grundwassers durch besagte Reaktionszone läuft.

6. Verfahren nach Anspruch 1 oder 2, gekennzeichnet durch eine, langsame Filterzone genannte, Pufferzone (B, AEP), zwischen besagter Reaktionszone und dem Absenkkonus eines Pumpenbrunnens zum Verteiler (AEP) hin.

7. Verfahren nach Anspruch 5, gekennzeichnet durch die Anordnung, im besagten Bereich, von piezometrischen Röhren, durch welche die Behandlung verfolgt werden kann.

8. Verfahren nach Anspruch 1 oder 2, dadurch gekennzeichnet, dass besagte Quelle abbaubaren Kohlenstoffs eine Zweistoffmischung aus Ethanol und Athansäure enthält oder eine Dreierkombination, die ein Abgangsprodukt der landwirtschaftlichen Nährmittelindustrie einschliesst.

9. Verfahren nach den Ansprüchen 2 und 5, dadurch gekennzeichnet, dass besagte Zufuhr auf der Ansaugseite einer Pumpe ($P_1$) erfolgt, welche auf der Ansaugseite mit den Pumpenbrunnen und auf der Ablasseite mit den Wiedereinfürbrunnen verbunden ist.

10. Verfahren nach Anspruch 5, dadurch gekennzeichnet, dass, wenn es auf ein eingeschlossenes Gründwasser angewendet wird, in den Pump- und Wiedereinfürleitungen eine Entgasungsvorrichtung vorgesehen ist.

FIG.1

V

RS

⊖ AEP

R

EP 0 315 526 B1

# FIG.2

# FIG.3

# FIG.4